# EUROPÄISCHE PATENTANMELDUNG

(11) **EP 2 813 524 A1**
(43) Veröffentlichungstag der Anmeldung: **17.12.2014**
(21) Anmeldenummer: 13171206.9
(22) Anmeldetag: 10.06.2013
(51) Int. Cl.: C08F 8/40, C08C 19/24, C08L 101/00, C08L 101/02, C09K 21/14, C09C 3/10, B01F 17/52, C08F 297/04, C08F 8/46, C08F 8/34, C08F 8/36, C08F 8/44, C08F 8/12, C08L 53/02, C08L 77/02, C08L 77/06, C08L 67/02, C08J 5/04

(54) **Phosphorylierte Polymere**

(71) Anmelder: BASF SE, 67056 Ludwigshafen (DE)
(72) Erfinder: König, Alexander, 76646 Bruchsal (DE); Knoll, Konrad, 68199 Mannheim (DE)
(74) Vertreter: Féaux de Lacroix, Stefan

(57) **Zusammenfassung**

Beschrieben wird ein Verfahren zur Herstellung von phosphorhaltigen organischen Polymeren, durch Umsetzung von organischen Polymeren, die Kohlenstoff-Kohlenstoff-Doppelbindungen enthalten, mit Dialkylphosphiten in Gegenwart von unter den Umsetzungsbedingungen freie Radikale bildenden organischen Verbindungen, unter kovalenter Anbindung des Phosphoratoms des Dialkylphosphits an ein Kohlenstoffatom des organischen Polymers. Ebenfalls beschrieben werden nach dem Verfahren erhältliche phosphorhaltige organische Polymere, sowie deren Verwendung zur flammhemmenden Ausrüstung brennbarer Feststoffe oder zur Ausrüstung anorganischer oxidischer Feststoffe, sowie entsprechend ausgerüstete thermoplastische Formmassen.

## Beschreibung

Die Erfindung betrifft Verfahren zur Herstellung phosphorhaltiger organischer Polymere, nach dem Verfahren erhältliche phosphorhaltige organische Polymere, sowie deren Verwendung zur flammhemmenden Ausrüstung brennbarer Feststoffe oder zur Ausrüstung anorganischer oxidischer Feststoffe, sowie entsprechend ausgerüstete thermoplastische Formmassen.

Die flammhemmende Ausrüstung thermoplastischer Formmassen durch phosphorhaltige Verbindungen wie DEPAL und roter Phosphor ist an sich bekannt. Die WO 2012/152805 beschreibt zudem den Einsatz von cyclischen Phenoxyphosphazenen und (Di-)phosphinat-Salzen als flammhemmende Inhaltstoffe thermoplastischer Formmassen.

Neben niedermolekularen phosphorhaltigen Flammschutzmitteln besteht auch Interesse an phosphorylierten Polymeren, die in Flammschutz-Anwendungen eingesetzt werden können.

Die Synthese von Verbindungen, die eine Kohlenstoff-Phosphor-Bindung aufweisen, ist an sich bekannt. US 2,957,931 beschreibt derartige Verfahren.

Die Anbindung von Dialkylphosphonaten an ethylenisch ungesättigte Verbindungen ist zudem in J. Am. Chem. Soc. 81, (1959), Seiten 6275 bis 6277 beschrieben.

Die radikalische Addition von Dimethylphosphit an Polypentenamer ist aus J. Polymer Science, Polymer Chemistry Edition, Vol. 15, (1977), Seiten 547 bis 560, bekannt.

Die Phosphorylierung erfolgt häufig mit niedrigen Ausbeuten. Das Polypentamer wird beispielsweise mit einem 20-fachen Überschuss an Dimethylphosphit umgesetzt, wobei weniger als 10 mol-% Dimethylphosphonat an die Polymerkette gebunden wurden.

Bei der Phosphorylierung von Monomeren müssen die so erhaltenen phosphorylierten Monomere polymerisiert werden, was technisch häufig nicht möglich ist.

Es besteht daher weiterhin ein Bedarf an phosphorylierten Polymeren, die zur flammhemmenden Ausrüstung brennbarer Feststoffe geeignet sind und die in unaufwändiger Weise hergestellt werden können.

Die Aufgabe wird erfindungsgemäß gelöst durch ein Verfahren zur Herstellung von phosphorhaltigen organischen Polymeren, durch Umsetzung von organischen Polymeren, die Kohlenstoff-Kohlenstoff-Doppelbindungen enthalten, mit Dialkylphosphiten in Gegenwart von unter den Umsetzungsbedingungen freie Radikale bildenden organischen Verbindungen, unter kovalenter Anbindung des Phosphoratoms des Dialkylphosphits an ein Kohlenstoffatom des organischen Polymeren.

Die Aufgabe wird ferner gelöst durch ein nach diesem Verfahren erhältlichen phosphorhaltigen organischen Polymeren.

Die Aufgabe wird zudem gelöst durch die Verwendung derartiger phosphorhaltiger organischer Polymerer zur flammhemmenden Ausrüstung brennbarer Feststoffe oder zur Ausrüstung anorganischer oxidischer Feststoffe.

Die Aufgabe wird ferner gelöst durch eine thermoplastische Formmasse, enthaltend a) 30 bis 95 Gew.-% mindestens eines thermoplastischen Polymers, das keinen Phosphor enthält, als Komponente A, b) 1 bis 30 Gew.-% mindestens eines derartigen phosphorhaltigen organischen Polymers als Komponente B, c) 0 bis 15 Gew.-% weitere flammhemmende Hilfsstoffe als Komponente C, d) 0 bis 20 Gew.-% mindestens eines schlagzäh-modifizierenden Polymers als Komponente D, e) 0 bis 50 Gew.-% Glasfasern als Komponente E, f) 0 bis 30 Gew.-% weitere Zusatzstoffe als Komponente F, wobei die Gesamtmenge der Komponenten A bis F 100 Gew.-% ergibt.

Im erfindungsgemäßen Verfahren werden organische Polymere, die Kohlenstoff-Kohlenstoff-Doppelbindungen enthalten, mit Dialkylphosphiten in Gegenwart von unter den Umsetzungsbedingungen freie Radikale bildenden organischen Verbindungen umgesetzt bzw. phosphoryliert.

Erfindungsgemäß wurde gefunden, dass eine derartige Phosphorylierung der organischen Polymere mit hohen Ausbeuten gelingt, wenn die Affinität des Dialkylphosphits zum organischen Polymer ausreichend hoch ist.

Dies kann dadurch gewährleistet werden, dass ein ausreichend polares organisches Polymer eingesetzt wird. Es können erfindungsgemäß hinreichend polare organische Polymere eingesetzt werden, oder unpolare oder zu wenig polare organische Polymere können durch Einführung polarer Gruppen in das Polymer polarer gemacht werden.

Beispielsweise weist ein organisches Polymer, das mehr als 65 Gew.-%, bezogen auf das organische Polymer, an vinylaromatischen Einheiten aufweist, in der Regel eine ausreichende Polarität auf, um phosphoryliert zu werden. In diesem Fall ist die Einführung ionischer Gruppen nicht notwendig.

Die Erhöhung der Polarität des organischen Polymeren kann beispielsweise erreicht werden durch Einbau von polaren Gruppen, wie (Meth)acrylsäure oder seine Ester, Hydroxy(meth)acrylaten wie Hydroxyethylhexylacrylat, (Meth)acrylamid, Acrylnitril, usw.

Alternativ oder zusätzlich kann auf die Kohlenstoff-Kohlenstoff-Doppelbindungen im organischen Polymer Maleinsäureanhydrid aufgebracht werden, um so Bernsteinsäure-AnhydridGruppen einzuführen. Vorzugsweise werden bis zu 20 %, besonders bevorzugt bis zu 10 % der Allylgruppen bzw. Kohlenstoff-Kohlenstoff-Doppelbindungen derart gepfropft.

Ferner können polare Gruppen durch Hydroborierung/Oxidation, Chlor- oder Brommethylierung/Hydrolyse oder durch Sulfonierung eingeführt werden. Die polaren Gruppen können als Endgruppen in der Polymerkette vorliegen oder auch innerhalb der Polymerkette vorhanden sein.

Bevorzugt wird erfindungsgemäß für die Umsetzung ein organisches Polymer eingesetzt, das, bezogen auf die Monomer-Einheiten des organischen Polymers, 0,01 bis 50 mol-%, besonders bevorzugt 0,5 bis 20 mol-%, insbesondere 1 bis 10 mol-% an ionischen Gruppen aufweist, die ganz oder teilweise in Salzform vorliegen können. Damit können die ionischen Gruppen teilweise oder vollständig deprotoniert vorliegen.

Vorzugsweise sind die ionischen Gruppen ausgewählt aus Carboxyl-, Sulfinat-, Sulfonat- und/oder Sulfatgruppen.

Das Vorliegen der ionischen Gruppen führt dazu, dass die Polarität der erfindungsgemäß eingesetzten organischen Polymere der Polarität der Dialkylphosphite angepasst wird, so dass eine ausreichende Affinität beider Komponenten gegeben ist. Hierdurch kann eine zügige Umsetzung der Dialkylphosphite mit den Kohlenstoff-Kohlenstoff-Doppelbindungen erreicht werden, bei hoher Pfropfausbeute, wobei eine Vernetzung oder ein Molmassen-Aufbau weitgehend verhindert werden kann.

Beispielsweise kann das für die Umsetzung eingesetzte organische Polymer sulfoniert sein.

Für die Sulfonierung ist es vorteilhaft, dass das organische Polymer aromatische Gruppen aufweist, da dann eine schonende Sulfonierung der aromatischen Gruppen möglich ist, ohne dass die Kohlenstoff-Kohlenstoff-Doppelbindungen oder die Allylgruppen durch die Sulfonierung angegriffen werden.

Bevorzugt liegen daher im organischen Polymer 10 bis 70 Gew.%, besonders bevorzugt 20 bis 60 Gew.-%, insbesondere 30 bis 50 Gew.-% an aromatische Gruppen enthaltenden Monomer-Bausteinen vor, bezogen auf das gesamte organische Polymer. Beispiele geeigneter aromatische Gruppen aufweisender Monomere sind vinylaromatische Monomere wie Styrol oder Methylstyrol.

Das Molekulargewicht des in der Umsetzung eingesetzten organischen Polymers ist unkritisch. Bevorzugt liegt das Zahlenmittel des Molekulargewichts (Mₙ) im Bereich von 1000 bis 1.000.000, besonders bevorzugt im Bereich von 2000 bis 300.000, insbesondere im Bereich von 5000 bis 200.000.

Das zur Umsetzung eingesetzte organische Polymer kann ein Homopolymer oder Copolymer sein. Bevorzugt handelt es sich um ein statistisches Copolymer oder Bi- oder Multiblock-Copolymer.

Dabei kann die Kohlenstoff-Kohlenstoff-Doppelbindung in der Polymerhauptkette oder in einer Seitenkette vorliegen. Bevorzugt liegt die Kohlenstoff-Kohlenstoff-Doppelbindung in der Polymerhauptkette vor.

Das erfindungsgemäß eingesetzte organische Polymer kann sich von beliebigen geeigneten Monomer-Grundbausteinen ableiten. Geeignete Polymere sind beispielsweise beschrieben in Hadjichristidis, "Blockcopolymers", Wiley, 2003, Seiten 4 bis 173 und Hsieh und Quirk, "Anionic Polymerization", Decker, 1996, Seiten 261 bis 394.

Die Herstellung der Polymere kann durch alle Polymerisationsmethoden erfolgen, wie anionische, kationische, radikalische oder ringöffnende Metathese-Polymerisation. Zur radikalischen Polymerisation gehören auch kontrollierte radikalische Polymerisationen, beispielsweise unter Einsatz von TEMPO und ähnlichen Verbindungen.

Geeignete AB-Diblockcopolymere können beispielsweise durch anionische Polymerisation von Styrol mit Isopren, Butadien, Cyclohexadien, Methylmethacrylat, Butylmethacrylat, Butylacrylat, 2,3-Glycidylmethacrylat, Stearylmethacrylat, 2-Vinylpyridin, 4-Vinylpyridin, Ethylenoxid, Caprolacton, Hexamethylcyclotrisiloxan, Ferrophenyldimethylsilan oder Hexylisocyanat erhalten werden, ferner aus alpha-Methylstyrol mit Butadien, Isopren mit 2-Vinylpyridin, Ethylenoxid, Hexamethylcyclotrisiloxan, Butadien mit Caprolacton oder Ethylenoxid, Methylmethacrylat mit Butylmethacrylat und 2-Vinylpyridin mit Butylmethacrylat, Caprolacton oder Ethylenoxid.

ABA-Triblockcopolymere sind beispielsweise zugänglich durch anionische Polymerisation von Styrol/Butadien, Styrol/Isopren, p-Methylstyrol/Butadien, alpha-Methylstyrol/Isopren, tert.-Butylstyrol/Butadien, 4-Vinylpyridin/Butadien, Ethylenoxid/Isopren, Isopren/tert.-Butylacrylat, tert.-Butylmethacrylat/Isopren, Methylmethacrylat/Butadien, Methylmethacrylat/Octylacrylat, Glycidylmethacrylat/Butadien, Isobornylmethacrylat/Butadien, Ethylenoxid/Butadien.

Eine chemische Modifizierung der Polymeren kann gegebenenfalls wie vorstehend ausgeführt beispielsweise durch Hydrierung, Hydrolyse, Quaternisierung, Sulfonierung, Hydroborierung/Oxidation, Epoxidierung, Chlor/Brom-Methylierung, Hydrosilylierung, erfolgen.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

Es können auch nicht-lineare Blockcopolymere wie sternförmige Blockcopolymere oder gepfropfte Copolymere oder andere komplexe Copolymer-Architekturen eingesetzt werden. Ungesättigte Blockcopolymere können auch durch ringöffnende Metathese-Polymerisation erhalten werden.

Für die ringöffnende Metathese-(ROMP)-Polymerisation können alle geeigneten Monomere wie z. B. Oxanorbornen, eingesetzt werden.

Erfindungsgemäß bevorzugt sind Vinylaromat-Dien-Copolymere mit bis zu 30 Gew.-% Gesamtbutadien-Gehalt. Unter den nachfolgend beschriebenen Bedingungen zur radikalischen Phosphorylierung können sie unmittelbar mit über 50 % Ausbeute, bezogen auf die Doppelbindungen im Polymer, phosphoryliert werden. Derartige Polymere können statistisch aufgebaut sein, als lineares Blockpolymer mit Blockfolgen wie S-B, S-B-S, (S-B)n, B-S-B, (S-B)nS oder B-(S-B)n vorliegen oder sternförmig beispielsweise nach der Formel (S-B)n-x, (B-S)n-x, (S-B-S)n-x, (B-S-B)n-x vorliegen, wobei x ein n-funktionelles Kopplungsmittel oder Initiatormolekül mit einer Funktionalität >1 bedeutet. S bedeutet ein Polymerblock bestehend aus Styrol und/oder einem anderen Vinylaromaten mit gleicher oder unterschiedlichen Blocklängen sowie enger oder breiter oder multimodaler Blocklängenverteilung. B bedeutet ein dienhaltiger Polymerblock, der ausschließlich aus Dien-Einheiten wie Butadien, Isopren und anderen Dienen und ihren Mischungen bestehen kann, der aber auch ein statistisches Copolymer dieser Diene mit Vinylaromaten sein kann, beispielsweise aus Styrol und Butadien, wobei das DienNinylaromat-Verhältnis in einem Bereich von 99/1 bis 1/99, bevorzugt 90/10 bis 10/90 variieren kann. Innerhalb des Blocks kann die Monomer-Zusammensetzung konstant sein oder einen Gradienten aufweisen. Der Übergang zwischen den einzelnen Blöcken kann scharf oder verschmiert (englisch: tapered) sein, das heißt, bei scharf eine sprunghafte Zusammensetzungsänderung und bei verschmiert einen Polymerabschnitt mit einem Monomergradienten aufweisen.

Ebenfalls erfindungsgemäß sind Vinylaromat-Dien-Copolymere mit über 30 Gew.-% Gesamtbutadien-Gehalt. Für die Erzielung von Phosphorylierungsgraden von über 50 % werden bevorzugt polare Gruppen eingeführt, besonders bevorzugt ionische Gruppen.

Ebenfalls erfindungsgemäß vorteilhaft einsetzbar sind Pfropfpolymere, bei denen vinylische Monomere auf ein olefinisch ungesättigtes Polymer aufgepfropft werden. Die Pfropfgrundlage können Polydiene basierend auf Monomeren wie Butadien, Isopren und andere Alkylbutadiene sowie deren Mischungen sein, ferner deren Mischungen mit Vinylaromaten wie Styrol, wie beispielsweise SBR, insbesondere solution-SBR, aber auch deren Mischungen mit anderen Vinylmonomeren wie Acrylnitril, Acrylaten und Methacrylaten. Ebenfalls als Pfropfgrundlage geeignet sind Polymere resultierend aus der ringöffnenden Metathese-Polymerisation, wie beispielsweise Polypentenamer, Polyoktenamer, Polynorbornen, Polyoxynorbornen und andere Monomere, die sich für die ringöffnende Metathese-Polymerisation eignen. Ebenfalls als Pfropfgrundlage geeignet sind Vinylaromat-Dien-Blockpolymere, wie sie oben beschrieben sind. Die Pfropfgrundlage wird bevorzugt in dem Monomer oder der Monomermischung gelöst, das oder die als Pfropfast aufgepfropft werden soll. Die Pfropfung kann ggf. im Beisein eines Lösungsmittels und eines Radikalstarters erfolgen. Geeignete Monomere sind Vinylaromaten wie Styrol, andere vinylische Monomere wie Acrylnitril, Acrylate, Methacrylate und auch deren Kombination. Die Molmasse der Pfropfäste kann über die Polymerisationstemperatur und ggf. durch den Zusatz von Reglern gesteuert werden. Je nach Anwendung kann über die Molmassen der Pfropfgrundlage und die Anzahl sowie Molmasse der Pfropfäste der spätere Phosphorgehalt über einen weiten Bereich variiert werden. Der Molmassenbereich beginnt im Oligomerbereich (Mw>500) und reicht bis zu 2 Millionen.

Die Polymere können ferner andere reaktive Gruppen enthalten, z. B. -OH, NCO usw. Diese Gruppen können später für weitere Reaktionen wichtig sein, wie sie beispielsweise bei der Lackierung eines mit dem phosphonierten Polymer behandelten feuerverzinkten Stahlblechs auftreten.

Besonders bevorzugt werden erfindungsgemäß gummi-elastische Blockcopolymerisate aus mindestens einem aus Styrolmonomeren aufgebauten harten Block A und mindestens einem aus Styrolmonomeren sowie Dienen aufgebauten elastomeren Block B/A eingesetzt, wie sie in der WO 97/40079 beschrieben sind. Bevorzugt sind gummi-elastische Blockcopolymerisate aus mindestens einem einpolymerisierte Einheiten eines aus vinylaromatischen Monomeren aufgebauten, eine Hartphase bildenden Block A und mindestens einem einpolymerisierte Einheiten eines vinylaromatischen Monomeren sowie eines Dien aufweisenden Elastomeren, eine Weichphase bildenden Block (B/A), wobei die Glastemperatur Tg des Blocks A über 25 °C und die des Blocks B/A unter 25 °C liegt und das Phasen-Volumen-Verhältnis von Block A zu Block (B/A) so gewählt ist, dass der Anteil der Hartphase am gesamten Blockcopolymerisat 1 bis 40 Vol.-% und der Gewichtsanteil des Diens weniger als 50 Gew.-% beträgt, wobei der relative Anteil an 1,2-Verknüpfungen des Polydiens, bezogen auf die Summe an 1,2- und 1,4-tris/trans-Verknüpfungen unterhalb von 15 % liegt.

Bevorzugte, erfindungsgemäß eingesetzte organische Polymere weisen einpolymerisierte Einheiten vinylaromatischer Monomere und Dien-Monomere auf.

Dabei können mehr als 65 Gew.-%, bezogen auf das in der Umsetzung eingesetzte organische Polymer, an vinylaromatischen Einheiten vorliegen und keine ionischen Gruppen.

Es ist auch möglich, dass das zur Umsetzung eingesetzte organische Polymer, jeweils bezogen auf das Polymer, 10 bis 70 Gew.-%, vorzugsweise 20 bis 60 Gew.-%, insbesondere 30 bis 50 Gew.-% vinylaromatischer Einheiten und 30 bis 90 Gew.-%, vorzugsweise 40 bis 80 Gew.-%, insbesondere 50 bis 70 Gew.-% Dien-Einheiten als einpolymerisierte Einheiten aufweist und 0,5 bis 5 %, vorzugsweise 1 bis 4 %, insbesondere 2 bis 3 % der aromatischen Einheiten sulfoniert sind.

Die Reaktion von Dialkylphosphiten mit C=C-Bindungen läuft in Gegenwart von freien Radikalen. Diese können z. B. von Peroxiden, Hydroperoxiden, labilen C-C-Verbindungen oder Azoverbindungen stammen. Geeignete Verbindungen sollten eine Halbwertszeit von 20 Sekunden bis 10 Stunden bei der Reaktionstemperatur aufweisen. Typische Reaktionstemperaturen sind 50 bis 150°C, bevorzugt 60°C bis 120°C.

Es kann vorteilhaft sein, einen Polymerstabilisator, wie z. B. ein sterisch gehindertes Phenol zusätzlich zu verwenden. Diese Verbindungen reduzieren die Vernetzung des Polymeren unter den Reaktionsbedingungen.

Der molare Überschuss an Dialkylphosphit beträgt vorzugsweise 1-50, bevorzugt 2-30, bezogen auf die C=C-Bindungen.

Die Zugabe der Komponenten kann variiert werden. Bevorzugt wird das Dialkylphosphit zusammen mit dem Lösungsmittel vorgelegt. Das Polymer kann dann zusammen mit dem Radikalspender zudosiert werden. Die Dosierzeiten sind bevorzugt 1 h bis 7 Tage, besonders bevorzugt 8 h bis 48 h.

Die richtige Wahl des Lösungsmittels kann vorteilhaft sein. Es sollte von mittlerer Polarität sein, eine Permittivität von größer 5 wurde in manchen Fällen als vorteilhaft bewiesen. Bevorzugt werden Dioxan, Dimethoxyethan, Diethylenglykoldimethylether und Diethylenglykoldieethylether.

Der Zusatz von basischen Komponenten mit einem ph-Wert > 8 kann vorteilhaft sein, bevorzugt werden Amine (primär, sekundär, tertiär), die bevorzugt in einem kleinen Überschuss, bezogen auf die deprotonierbaren Gruppen im Polymeren, eingesetzt werden. Ferner können organische Salze mit Seifenwirkung eingesetzt werden, sowie nicht-ionische Tenside, die als PhasenTransfer-Katalysator vorteilhaft mitverwendet werden können, in Mengen von weniger als 10 Gew.-%, bezogen auf das eingesetzte Polymer.

Als Dialkylphosphite können beliebige geeignete Dialkylphosphite eingesetzt werden, die gleiche oder unterschiedliche Alkylreste aufweisen. Bevorzugt werden Di-C₁₋₆-Alkylphosphite, besonders bevorzugt Di-C₁₋₃-Alkylphosphite, insbesondere Dimethylphosphit oder Diethylphosphit, eingesetzt.

Die so erhaltenen phosphorhaltigen organischen Polymere, die einen hohen Phosphorylierungsgrad aufweisen, können zur flammhemmenden Ausrüstung von Polymeren sowie nach Hydrolyse zum Anhaften an polaren Oberflächen und Dispergieren von anorganischen Füllstoffen mit oxidischer Oberfläche eingesetzt werden.

Bevorzugt beträgt der Phosphorylierungsgrad, bezogen auf die im für die Umsetzung eingesetzten organischen Polymer vorliegenden Kohlenstoff-Kohlenstoff-Doppelbindungen, 10 bis 100 mol-%, besonders bevorzugt 40 bis 100 mol-%, insbesondere 60 bis 100 mol-%.

Es kann vorteilhaft sein, die Umsetzung in Gegenwart eines Radikalfängers durchzuführen, um eine Vernetzungsreaktion zu unterdrücken.

Das phosphorhaltige organische Polymer kann nach der Phosphorylierung zur Bildung von Phosphonsäure-Gruppen hydrolysiert sein. Dies ist insbesondere bei der Ausrüstung anorganischer oxidischer Feststoffe vorteilhaft, während für die flammhemmende Ausrüstung brennbarer Feststoffe, vorzugsweise von Kunststoffen, Holz oder natürlichen Fasern, nicht-hydrolysierte, phosphorhaltige organische Polymere eingesetzt werden.

Die erfindungsgemäß erhältlichen phosphorhaltigen organischen Polymere werden bevorzugt zur flammhemmenden Ausrüstung brennbarer Feststoffe, vorzugsweise von Kunststoffen, Holz oder natürlichen Fasern, oder zur Ausrüstung anorganischer oxidischer Feststoffe eingesetzt. Die Kunststoffe können BULK-Kunststoffe, Kunststoff-Schäume, Elastomere, Dispersionen oder Lacke sein. Anorganische oxidische Feststoffe leiten sich vorzugsweise von den Metallen Aluminium, Silizium, Titan, Zink, Magnesium ab, bzw. von diese Elemente enthaltenden Mineralien. Zudem können auch Farbpigmente und Polymere ausgerüstet werden.

Bevorzugt werden erfindungsgemäß sulfonierte und phosphorylierte organische Polymere eingesetzt.

Die phosphonierten Polymere können wie bei Azuma beschrieben mit HCl-Gas zu Polymeren mit freien Phosphonsäure-Gruppen umgesetzt werden. Alternativ gelingt die Esterspaltung durch den Zusatz von bevorzugt 1-10%-iger Phosphorsäure in Wasser zu einer Polymerlösung in den oben genannten Ethern und anschließendem 2-4-stündigem Erhitzen auf bevorzugt 100-150°C, ggf. in einem Autoklaven.

Die Phosphonsäure-Gruppen helfen, Füllstoffe in Polymeren oder Lösungsmitteln zu dispergieren. Sie können daher auch Anwendungen in Waschmitteln finden.

Je höher die Molmasse des zu phosphorylierenden Dienblocks ist, desto schwieriger kann es sein, das Phasentransfer-Problem zwischen dem sehr unpolaren Polydien oder dienreichen Styrol-dien-copolymer und dem polaren Alkylphosphonat zu überwinden, d. h., man beobachtet einen geringeren Phosphorylierungsgrad neben zunehmendem Molmassen-Aufbau und Gelbildung durch Vernetzung. Eine ionische Gruppe am Kettenende, eingeführt etwa durch Umsetzung der lebenden Polymerkette mit Schwefeldioxid zur Sulfinsäure, hat oft keine ausreichende Fernwirkung. Abhilfe besteht vorzugsweise darin, dass man in die Dienkette zusätzlich polare, bevorzugt ionische Gruppen über geeignete Monomere einbaut. Dies kann beispielsweise durch Maleinierung einiger Dien-Einheiten geschehen. Ein bevorzugter Weg besteht darin, alle 10 bis 20 Dien-Einheiten eine Styroleinheit einzubauen und diese dann zu sulfonieren, etwa durch Umsetzung mit einer (unter)stöchiometrischen Menge eines Sulfonierungsagens wie Chlorsulfonsäure oder Acetylsulfonat, bevorzugt in einem chlorierten Kohlenwasserstoff wie 1,2-Dichlorethan, bevorzugt bei Temperaturen von 0 bis 25°C. Die Umsetzung sollte besonders schonend erfolgen, um eine Sulfonierung des Polydiens zu vermeiden, das sich dann unter Dunkelfärbung zersetzt. Diese Vorgehensweise ist dann von besonderem Interesse, wenn das eingesetzte Polymer überwiegend aus Dien besteht und Molmassen von über 2000 g/mol aufweist, besonders über 5000 g/mol. Sie ermöglicht oder erhöht den Phosphorylierungsgrad bei den Dialkyl- und Diarylphosphonaten. Derartige Polyphosphonsäureester eignen sich beispielsweise als Flammschutzmittel in Thermoplasten, Reaktivkunststoffen, Schäumen und Dispersionen.

Sie werden bevorzugt eingesetzt zur Ausrüstung einer thermoplastische Formmasse, enthaltend a) 30 bis 95 Gew.-% mindestens eines thermoplastischen Polymers, das keinen Phosphor enthält, als Komponente A, b) 1 bis 30 Gew.-% mindestens eines erfindungsgemäßen phosphorhaltigen organischen Polymers als Komponente B, c) 0 bis 15 Gew.-% weitere flammhemmende Hilfsstoffe als Komponente C, d) 0 bis 20 Gew.-% mindestens eines schlagzäh-modifizierenden Polymers als Komponente D, e) 0 bis 50 Gew.-% Glasfasern als Komponente E, f) 0 bis 30 Gew.-% weitere Zusatzstoffe als Komponente F, wobei die Gesamtmenge der Komponenten A bis F 100 Gew.-% ergibt.

Komponente A kann dabei aus beliebigen geeigneten Polymeren ausgewählt sein. Beispielsweise handelt es sich um ein Polyamid, Polyester, Polycarbonat, Polyether, Polyurethan, Polysulfon, Polyolefin oder einen Polymerblend aus zwei oder mehreren davon.

Besonders bevorzugt handelt es sich bei Komponente A um ein Polyamid.

Die erfindungsgemäß bevorzugt eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen aliphatischen Polyamiden handeln. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem, teilkristallinen oder teilaromatischen sowie amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure und Dodecandisäure (= Decandicarbonsäure) als Säuren genannt.

Als Diamine eignen sich besonders Alkandiamine mit 2 bis 12, insbesondere 6 bis 8 Kohlenstoffatomen sowie Di- (4-aminocyclohexyl)-methan oder 2,2-Di-(4-aminocyclo hexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Die nachfolgende, nicht abschließende Aufstellung enthält die genannten, sowie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA 4 (Pyrrolidon)
PA 6 (ε-Caprolactam)
PA 7 (Ethanolactam)
PA 8 (Capryllactam)
PA 9 (9-Aminononansäure)
PA11 (11-Aminoundecansäure)
PA12 (Laurinlactam)

Diese Polyamide und ihre Herstellung sind bekannt. Einzelheiten zu ihrer Herstellung findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6 oder Polyamid-66 eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um
verzweigend wirkende Monomere, die z. B. mindestens drei Carboxyl- oder Aminogruppen aufweisen,
Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,
oder um Polymerblöcke, die zur Anbindung an Carboxyl- oder Aminogruppen befähigt sind.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Die phosphorhaltigen organischen Polymere können allein oder in Kombination mit anderen flammhemmenden Substanzen und Synergisten als Komponente C verwendet werden.

Andere flammhemmende Substanzen können beispielsweise roter Phosphor, cyclische Phenoxyphosphazene mit mindestens Phenoxyphosphazen-Einheiten oder (Di)Phosphinat-Salze sein.

Ferner können auch Umsetzungsprodukte von Melamin mit einer Phosphorsäure oder Metallborate eingesetzt werden.

Bevorzugte Umsetzungsprodukte von Melamin mit einer Phosphorsäure sind Produkte, die erhalten werden durch Umsetzung im Wesentlichen äquimolarer Mengen von Melamin oder einem Kondensationsprodukt von Melamin mit Phosphorsäure, Pyrophosphorsäure oder Polyphosphorsäure nach geeigneten Verfahren. Besonders bevorzugt wird Melaminpolyphosphat eingesetzt, das durch Kondensation von Melaminphosphat durch Aufheizen unter Stickstoffatmosphäre erhalten werden kann. Melaminpolyphosphat weist die allgemeine Formel (C₃H₆N₆ HPO₃)ₙ auf.

Die Phosphorsäurekomponente im Melaminphosphat ist beispielsweise ortho-Phosphorsäure, phosphorige Säure, hypophosphorige Säure, Metaphosphorsäure, Pyrophosphorsäure, Triphosphorsäure oder Tetraphosphorsäure. Besonders bevorzugt ist ein Melaminpolyphosphat, das erhalten wird durch Kondensation eines Addukts von ortho-Phosphorsäure oder Pyrophosphorsäure mit Melamin. Der Kondensationsgrad des Melaminpolyphosphats ist vorzugsweise 5 oder größer. Das Melaminpolyphosphat kann alternativ auch ein äquimolares Additionssalz von Polyphosphorsäuren mit Melamin sein. Neben kettenförmiger Polyphosphorsäure kann auch cyclische Polymetaphosphorsäure eingesetzt werden. Das Additionssalz von Melaminpolyphosphat ist in der Regel ein Pulver, das erhalten wird durch Umsetzung einer wässrigen Aufschlämmung eines Gemisches von Melamin mit Polyphosphorsäure und nachfolgendes Abfiltrieren, Waschen und Trocknen. Die Korngröße des Melaminpolyphosphats kann in weiten Grenzen eingestellt werden, hierzu kann auch EP-A-2 100 919, Absatz [0026] verwiesen werden.

Geeignete Phosphinatsalze weisen die allgemeine Formel [R¹R²P(=O)-O]⁻ₘMm⁺ auf. Geeignete (Di)phosphinate die allgemeine Formel [O-P(=O)R¹-O-R³-O-P(=O)R²-O]²⁻ₙMₓ^{m+}, wobei R¹ und R² unabhängig voneinander lineare oder verzweigte C₁₋₆-Alkylreste oder C₆₋₁₀-Arylreste bedeuten, R³ einen linearen oder verzweigten C₁₋₁₀-Alkylenrest, C₆₋₁₀-Arylenrest, C₇₋₁₀-Alkylarylenrest oder C₇₋₁₀-Arylalkylenrest bedeutet, M Ca, Mg, Al oder Zn bedeutet, m die M-Valenz bedeutet, bestimmt als 2n = mx, n den Wert 1 oder 3 bedeutet und x den Wert 1 oder 2 bedeutet. Sofern m oder n einen Wert von 2 oder mehr aufweisen, können die Reste R¹ bis R³ an jeder Position frei gewählt werden.

Beispiele geeigneter Phosphinsäuresalze sind Dimethylphosphinat, Ethylmethylphosphinat, Diethylphosphinat, Methyl-n-propylphosphinat, Methandi(methylphosphinat), Benzol-1,4-di(methylphosphinat), Methylphenyl-phosphinat und Diphenylphosphinat. Die Metallkomponente M ist ein Kalziumion, Magnesiumion, Aluminiumion oder Zinkion.

Geeignete Phosphinatsalze sind beispielsweise Kalziumdimethylphosphinat, Magnesiumdimethylphosphinat, Aluminiumdimethylphosphinat, Zinkdimethyl-phosphinat, Kalziumethylmethylphosphinat, Magnesiumethylmethylphosphinat, Alumiumethylmethylphosphinat, Zinkethylmethylphosphinat, Kalziumdiethylphosphinat, Magnesiumdiethylphosphinat, Aluminiumdiethylphosphinat, Zinkdiethylphosphinat, Kalziummethyl-n-propylphosphinat, Magnesiummethyl-n-propylphosphinat, Aluminiummethyl-n-propylphosphinat, Zinkmethyl-n-propylphosphinat, Kalziummethylphenyl-phosphinat, Magnesiummethylphenylphosphinat, Aluminiummethylphenylphosphinat, Zinkmethylphenylphosphinat, Kalziumdiphenylphosphinat, Magnesiumdiphenylphospinat, Aluminiumdiphenylphosphinat und Zinkdiphenylphosphinat.

Beispiele geeigneter Diphospinatsalze sind Kalziummethandi(methylphosphinat), Magnesiummethandi(methylphosphinat), Aluminiummethandi(methylphosphinat), Zinkmethandi(methylphosphinat), Kalziumbenzol-1,4-di(methylphosphinat), Magnesiumbenzol-1,4-di(methylphosphinat), Aluminiumbenzol-1,4-di(methylphosphinat) und Zinkbenzol-1,4-di(methylphosphinat).

Besonders bevorzugt werden Phosphinatsalze eingesetzt, inbesondere Aluminiumethylmethylphosphinat, Aluminiumdiethylphosphinat und Zinkdiethylphosphinat. Besonders bevorzugt wird Aluminiumdiethylphosphinat eingesetzt.

Die (Di)phosphinatsalze können in beliebiger geeigneter Korngröße eingesetzt werden, siehe EP-A-2 100 919, Absatz [0032].

Die thermoplastische Formmasse kann mindestens ein schlagzäh-modifizierendes Polymer als Komponente D enthalten.

Als Komponente D werden 0 bis 20 Gew.-%., vorzugsweise 0 bis 10 Gew.-%, insbesondere 0 bis 8 Gew.-%, mindestens eines Schlagzäh-modifizierenden Polymers eingesetzt. Sofern ein Schlagzäh-modifizierendes Polymer vorliegt, beträgt die Mindestmenge 0,1 Gew.-%, vorzugsweise 1 Gew.-%, insbesondere 3 Gew.-%. Die maximal mögliche Menge der Komponente A verringert sich entsprechend, so dass die Gesamtmenge der Komponenten A bis F 100 Gew.-% ergibt. Die Komponente D muss nicht mitverwendet werden, ihr Einsatz kann aber zu einer verbesserten Schlagzähfähigkeit der erhaltenen Polyamid-Formmassen führen. Es handelt sich dabei um Schlagzäh-modifizierende Polymere, mit denen die Polyamide der Komponente A typischerweise schlagzäh ausgerüstet werden. Vorzugsweise handelt es sich um ein Elastomer, beispielsweise um natürliche oder synthetische Kautschuke oder andere Elastomere.

Als einsetzbare synthetische Kautschuke können Ethylen-Propylen-Dien-Kautschuk (EPDM), Styren-Butadien-Kautschuk (SBR), Butadien-Kautschuk (BR), Nitril-Kautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), Styrol-Butadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymere aus Ethylen und 1-Octen, 1-Buten oder Propylen, wie sie in der WO 2008/074687 beschrieben sind. Die Molekulargewichte derartiger Ethylen-α-Olefin-Copolymere liegt vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypropylen eingesetzt werden.

Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

Weitere als Komponente F geeignete Polymere sind in der EP-A-2 100 919 in Abschnitt [0044] genannt.

Besonders bevorzugt werden als Komponente F Copolymerisate von Ethylen und Acrylaten, Acrylsäure und/oder Maleinsäureanhydrid eingesetzt. Besonders bevorzugt werden Copolymere aus Ethylen, n-Butylacrylat, Acrylsäure und Maleinsäureanhydrid eingesetzt. Ein entsprechendes Copolymer ist unter der Bezeichnung Lupolen^{®} KR1270 von der BASF SE erhältlich.

### Komponente E

Als Komponente E enthalten die thermoplastischen Formmassen 0 bis 50 Gew.-%, bei Vorliegen 1 bis 50 Gew.-%, vorzugsweise 10 bis 35 Gew.-%, insbesondere 20 bis 30 Gew.-%, beispielsweise etwa 25 Gew.-% Glasfasern. Dabei können beliebige geeignete Glasfasern als Schnittglas oder in Form von Rovings eingesetzt werden. Vorzugsweise weisen die Schnittglasfasern einen Durchmesser von etwa 10 µm auf. Die Glasfasern können oberflächenbehandelt sein, beispielsweise silanisiert. Besonders vorteilhaft ist die Mitverwendung der Glasfasern.

### Komponente F

Als Komponente F können die erfindungsgemäßen thermoplastischen Formmassen 0 bis 30 Gew.-% weitere Zusatzstoffe enthalten. Bei diesen Zusatzstoffen kann es sich um weitere Füllstoffe, Stabilisatoren, Oxidationsverzögerer, Mittel gegen Wärmezersetzung und Zersetzung durch ultraviolettes Licht, Flammschutzmittel, Gleit- und Entformungsmittel, Färbemittel wie Farbstoffe und Pigmente, Keimbildungsmittel, Weichmacher, usw., handeln. Für eine nähere Beschreibung möglicher Zusatzstoffe kann auf die WO 2008/074687, Seiten 31 bis 37, verwiesen werden.

Vorzugsweise liegen 0,1 bis 20 Gew.-% der Komponente F vor (die Menge der Komponente A verringert sich entsprechend), wobei Komponente F Stabilisatoren und Schmiermittel enthält. Beispielsweise kann Zinkoxid als Stabilisator eingesetzt werden, und Kalziumstearat kann als Schmiermittel eingesetzt werden. Übliche Antioxidantien für Polyamid-Formmassen können eingesetzt werden, beispielsweise die unter der Marke Irganox^{®} von der BASF SE vertriebenen Antioxidantien.

Als weitere Füllstoffe kommen Kohlenstoff-Fasern, aromatische Polyamid-Fasern und andere Füllstoffe wie Gipsfasern, synthetische Calziumsilikate, Kaolin, calziniertes Kaolin, Wollastonit, Talkum und Kreide in Betracht.

Neben den Flammschutzmitteln der Komponenten B bis E können auch weitere Flammschutzmittel als Zusatzstoffe der Komponente H mitverwendet werden, beispielsweise auf Basis von Triazinen, Metallhydraten und Silikonen. Ein typischer flammhemmender Stoff auf Basis von Triazinen ist Melamincyanurat.

Weitere Zusatz-flammhemmende Stoffe können Metallverbindungen wie Magnesiumhydroxid, Aluminiumhydroxid, Zinksulfat, Eisenoxid und Boroxid sein, siehe auch EP-A-2 100 919, Absätze [0046] bis [0048].

Weitere synergistisch wirkende, flammhemmende Stoffe sind beispielsweise in der US 2010/0261818 in den Abschnitten [0064] und [0065] genannt.

Die Herstellung der erfindungsgemäßen Formmassen erfolgt durch Vermischen der Komponenten A bis F. Zweckmäßigerweise verwendet man hierzu Extruder, beispielsweise Einschnecken- oder Zweischnecken-Extruder, oder andere herkömmliche Plastifizierungsvorrichtungen wie Brabender-Mischer oder Banbury-Mischer.

Die Reihenfolge der Vermischung der einzelnen Komponenten kann dabei frei gewählt werden.

Die erfindungsgemäßen Formmassen zeichnen sich durch eine verbesserte Flammhemmung, verbunden mit verbesserter Bruchdehnung und Charpy-Schlagzähigkeit aus. Sie eignen sich zur Herstellung von Formkörpern, Fasern oder Folien.

Die Erfindung betrifft auch entsprechende Formkörper, Fasern oder Folien aus der vorstehend beschriebenen thermoplastischen Formmasse.

Die Erfindung wird durch die nachstehenden Beispiele näher erläutert.

### Beispiel Synthese

Bereitstellung des Styrol-Butadien (SB)-Blockcopolymeren

Die Herstellung geeigneter SB-Blockcopolymere ist beispielsweise in EP 0 859 803 B1 beschrieben, hier wurde speziell Beispiel 3 mit der Architektur S-(S/B)3-S verwendet.

Beispiel 1: Sulfonierung von SB-Blockpolymeren

In einer mit Stickstoff inertisierten Glasapparatur werden 10,0 g SB-Blockcopolymer aus EP 0 859 803 B1, Beispiel 3 (35%Bu/65%S) und 250 ml wasserfreies Dichlorethan vorgelegt. Nachdem das Polymer gelöst ist, wird auf -10 bis -15°C gekühlt und 0,18 g Chlorsulfonsäure, gelöst in 50 ml wasserfreiem Dichlorethan, in 1 h unter Rühren zudosiert. Nach 30 Minuten Nachreaktion werden 0,56 g Tributylamin zugegeben, zur Neutralisierung der freigesetzten NCl und der Sulfonsäure-Gruppe. Für die Elementaranalyse S werden 10 ml der Reaktionslösung in Wasser gefällt, filtriert, mit Ethanol gewaschen und 15 h bei 50°C/20 mbar getrocknet.

Elementaranalyse S: 0,59 g/100 g (Theorie: 0,50 g/100g, entspricht 2,5% der Phenyleinheiten).

### Beispiel 2: Phosphorylierung von sulfonierten SB-Copolymeren

In einer Glasapparatur werden 300 ml Diethylenglykoldiethylether (DEGDE) und 67,0 g Diethylphosphit (15-facher Überschuss, bezogen auf olefinische Doppelbindungen) vorgelegt. Nach Erhitzen auf 120°C werden über 24 h 5,0 g sulfoniertes SB-Copolymer aus Beispiel 1 und 9,7 g Di-tert-Butylperoxid, jeweils in 70 ml DEGDE gelöst, zudosiert und 8 h nachreagieren gelassen. Das phosphorylierte Polymer wird in Wasser gefällt, mit Wasser und Ethanol gewaschen, filtriert und 12 h bei 70°C/20 mbar getrocknet.

Elementaranalyse P: 6,6 g/100 g (Theorie: 10,5 g/100 g; Phosphorylierungsgrad = 63 %)

### Beispiel flammhemmende thermoplastische Formmasse

### PA 6

Komponente A: Polyamid 6, der BASF SE, Ultramid^{®} B27
Komponente B1: Ethylen-Okten-Copolymer mit Maleinsäureanhydrid modifiziert, Fusabond^{®} MN493, Dupont
Komponente B2: Ethylen-Acrylat-Copolymer, Lupolen^{®} KR1270, BASF SE
Komponente B3: Phosphoryliertes SB-Copolymer aus Beispiel 2
Komponente C: Glasfaser, 10 µm, OCF 1110, Dow Corning
Komponente D1: Flammschutzmittel Aluminiumdiethylphosphinat, Exolit^{®} OP 1230, Clariant
Komponente D2: Flammschutzmittel Melaminpolyphosphat, Melapur^{®} M200, BASF SE
Komponente E: Zinkborat
Komponente F: Aluminiumstearat, Alugel^{®} 30DF, Bährlocher AG
Komponente G: Antioxidans, Irganox^{®} 1098, BASF SE

**Tabelle 1: Phosphoryliertes SB-Copolymer aus Beispiel in verstärktem PA6**

| | V1 | V2 | V3 | Beispiel 1 |
|---|---|---|---|---|
| A | 54,45 | 39,45 | 39,45 | 39,45 |
| B1 | | 15 | | |
| B2 | | | 15 | |
| B3 | | | | 15 |
| C | 25 | 25 | 25 | 25 |
| D1 | 12,7 | 12,7 | 12,7 | 12,7 |
| D2 | 6,3 | 6,3 | 6,3 | 6,3 |
| E | 1 | 1 | 1 | 1 |
| F | 0,2 | 0,2 | 0,2 | 0,2 |
| G | 0,35 | 0,35 | 0,35 | 0,35 |
| Zugmodul / MPa | 8900 | 8800 | 8900 | 8900 |
| Bruchspannung / MPa | 130 | 110 | 115 | 110 |
| Bruchdehnung / % | 3,2 | 3,5 | 3,5 | 3,6 |
| Charpy-Kerbschlagzähigkeit / kJ/m² | 70 | 90 | 95 | 95 |
| UL 94, 0,8 mm | V-0 | Nicht bestanden | Nicht bestanden | V-0 |

### PA66 - Flammschutzpaket auf Basis von Aluminiumdiethylphosphinat

Komponente A: Polyamid 66, Ultramid^{®} A27; BASF SE
Komponente B1: Ethylen-Okten-Copolymer mit Maleinsäureanhydrid modifiziert, Fusabond^{®} MN493, Dupont
Komponente B2: Ethylen-Acrylat-Copolymer, Lupolen^{®} KR1270, BASF SE
Komponente B3: Phosphoryliertes SB-Copolymer aus Synthesebeispiel
Komponente C: Glasfaser, 10 µm, OCF 1110, Dow Corning
Komponente D1: Flammschutzmittel Aluminiumdiethylphosphinat, Exolit^{®} OP 1230, Clariant
Komponente D2: Flammschutzmittel Melaminpolyphosphat, Melapur^{®} M200, BASF SE
Komponente E: Zinkborat
Komponente F: Aluminiumstearat, Alugel^{®} 30DF, Bährlocher AG
Komponente G: Antioxidans, Irganox^{®} 1098, BASF SE

**Tabelle 2: Phosphoryliertes SB-Copolymer aus Synthesebeispiel in verstärktem PA66**

| | Vergleich 1 | Vergleich 2 | Vergleich 3 | Beispiel 1 |
|---|---|---|---|---|
| A | 54,45 | 39,45 | 39,45 | 39,45 |
| B1 | | 15 | | |
| B2 | | | 15 | |
| B3 | | | | 15 |
| C | 25 | 25 | 25 | 25 |
| D1 | 12,7 | 12,7 | 12,7 | 12,7 |
| D2 | 6,3 | 6,3 | 6,3 | 6,3 |
| E | 1 | 1 | 1 | 1 |
| F | 0,2 | 0,2 | 0,2 | 0,2 |
| G | 0,35 | 0,35 | 0,35 | 0,35 |
| Zugmodul / MPa | 9300 | 9200 | 9200 | 9200 |
| Bruchspannung / MPa | 140 | 125 | 130 | 125 |
| Bruchdehnung / % | 3 | 3,5 | 3,5 | 3,5 |
| Charpy-Kerbschlagzähigkeit / kJ/m² | 60 | 90 | 85 | 85 |
| UL 94, 0,8 mm | V-0 | Nicht bestanden | Nicht bestanden | V-0 |

### PA 66 - Flammschutzpaket auf Basis von rotem Phosphor

Komponente A: Polyamid 66, Ultramid^{®} A27; BASF SE
Komponente B1: Ethylen-Okten-Copolymer mit Maleinsäureanhydrid modifiziert, Fusabond^{®} MN493, Dupont
Komponente B2: Ethylen-Acrylat-Copolymer, Lupolen^{®} KR1270, BASF SE
Komponente B3: Phosphoryliertes SB-Copolymer aus Synthesebeispiel
Komponente C: Glasfaser, 10 µm, OCF 1110, Dow Corning
Komponente D1: Flammschutzmittel roter Phosphor, 40 % roter Phosphor in PA66-Batch, Masteret 21440, Italmatch
Komponente E: Stabilisator/Schmiermittel, 50 % Zinkoxid, 25 % Kalziumstearat, 25 % Irganox^{®} 98, BASF SE, Ultrabatch 190X, Great Lakes
Komponente F: Schmiermittel, 50 % Stearylstearat, 25 % Zinkstearat, 25 % Calciumstearat, Ultrabatch^{®} 170

**Tabelle 3: Phosphoryliertes SB-Copolymer aus Synthesebeispiel in verstärktem PA66**

| | Vergleich 1 | Vergleich 2 | Vergleich 3 | Beispiel 1 |
|---|---|---|---|---|
| A | 50,21 | 35,21 | 35,21 | 35,21 |
| B1 | | 15 | | |
| B2 | | | 15 | |
| B3 | | | | 15 |
| C | 26 | 26 | 26 | 26 |
| D1 | 16,25 | 16,25 | 16,25 | 16,25 |
| E | 1,4 | 1,4 | 1,4 | 1,4 |
| F | 0,14 | 0,14 | 0,14 | 0,14 |
| Zugmodul / MPa | 8500 | 6500 | 6500 | 6400 |
| Bruchspannung / MPa | 120 | 110 | 105 | 115 |
| Bruchdehnung / % | 3,1 | 4 | 5,5 | 5 |
| Charpy-Kerbschlagzähigkeit / kJ/m² | 45 | 70 | 70 | 70 |
| UL 94, 0,8 mm | V-0 | Nicht bestanden | Nicht bestanden | V-0 |

### PBT - Polybutadienterephthalat

Komponente A: Polybutylenterephthalat, der BASF SE mit der Viskositätszahl von 107 ml/g (gemessen von einer 0,5%-igen (w/w)-Lösung in einem Phenol-Dichlorbenzol-Gemisch 1:1 bei 23°C, Ultradur^{®} B2550
Komponente B1: Ethylen-Okten-Copolymer mit Maleinsäureanhydrid modifiziert, Fusabond^{®} MN493, Dupont
Komponente B2: Ethylen-n-Butylacrylat-Glycidylmethacrylat-Terpolymer, Elvaloy^{®} PTW, Dupont
Komponente B3: Phosphoryliertes SB-Copolymer aus Synthesebeispiel
Komponente C: Glasfaser, Durchmesser 10 µm, Standard-Faserlänge: 4,5 mm, PPG 3786, PPG
Komponente D1: Flammschutzmittel Aluminiumdiethylphosphinat, Exolit^{®} OP 1240, Clariant
Komponente D2: Flammschutzmittel Melaminpolyphosphat, Melapur^{®} M200, BASF SE
Komponente D3: Flammschutzmittel Melamincyanurat, Melapur^{®} MC25, BASF SE
Komponente E: Schmiermittel, Polyethylen-Wachs, Luwax^{®} OA5, BASF SE

**Tabelle 4: Phosphoryliertes SB-Copolymer aus Synthesebeispiel in verstärktem PBT**

| | Vergleich 1 | Vergleich 2 | Vergleich 3 | Beispiel 1 |
|---|---|---|---|---|
| A | 52,2 | 37,2 | 37,2 | 37,2 |
| B1 | | 15 | | |
| B2 | | | 15 | |
| B3 | | | | 15 |
| C | 25 | 25 | 25 | 25 |
| D1 | 15 | 15 | 15 | 15 |
| D2 | 3,75 | 3,75 | 3,75 | 3,75 |
| D3 | 3,75 | 3,75 | 3,75 | 3,75 |
| E | 0,3 | 0,3 | 0,3 | 0,3 |
| Zugmodul / MPa | 10300 | 10000 | 9500 | 9500 |
| Bruchspannung / MPa | 110 | 105 | 105 | 105 |
| Bruchdehnung / % | 2,3 | 3 | 3 | 3 |
| Charpy-Kerbschlagzähigkeit / kJ/m² | 45 | 80 | 85 | 85 |
| UL 94, 0,8 mm | V-0 | Nicht bestanden | Nicht bestanden | V-0 |

### Verarbeitung

Die Komponenten wurden mit einem Doppelschneckenextruder mit einem L/D-Verhältnis von 25 extrudiert. Während des Verfahrens lag die Kompoundierungstemperatur bei 290°C bei PA66 und bei PA6 und PBT bei 270°C. Der Durchsatz lag bei 25 kg/h. Die Schneckengeschwindigkeit beträgt 350 rpm. Die erhaltenen Polymerstränge wurden granuliert und zur Herstellung der Probenkörper entsprechend spritzgegossen.

### Flammtests

Flammtests wurden gemäß der Richtlinie nach UL94 (Underwriter Laboratories) bei einer Probenkörper-Dicke von 0,8 mm durchgeführt.

## Patentansprüche

1. Verfahren zur Herstellung von phosphorhaltigen organischen Polymeren, durch Umsetzung von organischen Polymeren, die Kohlenstoff-Kohlenstoff-Doppelbindungen enthalten, mit Dialkylphosphiten in Gegenwart von unter den Umsetzungsbedingungen freie Radikale bildenden organischen Verbindungen, unter kovalenter Anbindung des Phosphoratoms des Dialkylphosphits an ein Kohlenstoffatom des organischen Polymers.

2. Verfahren nach Anspruch 1, **dadurch gekennzeichnet, dass** das für die Umsetzung eingesetzte organische Polymer 0,01 bis 50 mol-%, bezogen auf die Monomereinheiten des organischen Polymers, an ionischen Gruppen aufweist, die ganz oder teilweise in Salzform vorliegen können.

3. Verfahren nach Anspruch 2, **dadurch gekennzeichnet, dass** die ionischen Gruppen ausgewählt sind aus Carboxyl-, Sulfinat-, Sulfonat- und/oder Sulfatgruppen.

4. Verfahren nach Anspruch 3, **dadurch gekennzeichnet, dass** das für die Umsetzung eingesetzte organische Polymer sulfoniert ist.

5. Verfahren nach einem der Ansprüche 1 bis 4, **dadurch gekennzeichnet, dass** das für die Umsetzung eingesetzte organische Polymer ein Zahlenmittel des Molekulargewichts (Mₙ) im Bereich von 1000 bis 1.000.000 aufweist.

6. Verfahren nach einem der Ansprüche 1 bis 5, **dadurch gekennzeichnet, dass** das für die Umsetzung eingesetzte organische Polymer ein statistisches Copolymer oder ein Di- oder Multiblock-Copolymer ist.

7. Verfahren nach einem der Ansprüche 1 bis 6, **dadurch gekennzeichnet, dass** im für die Umsetzung eingesetzten organischen Polymer die Kohlenstoff-Kohlenstoff-Doppelbindung in der Polymerhauptkette vorliegt.

8. Verfahren nach Anspruch 7, **dadurch gekennzeichnet, dass** das für die Umsetzung eingesetzte organische Polymer polymerisierte Einheiten vinylaromatischer Monomere und Dien-Monomere aufweist.

9. Verfahren nach Anspruch 8, **dadurch gekennzeichnet, dass** das für die Umsetzung eingesetzte organische Polymer mehr als 65 Gew.-%, bezogen auf das für die Umsetzung eingesetzte organische Polymer, an vinylaromatischen Einheiten aufweist und keine ionischen Gruppen aufweist.

10. Verfahren nach Anspruch 8, **dadurch gekennzeichnet, dass** das für die Umsetzung eingesetzte organische Polymer, jeweils bezogen auf das für die Umsetzung eingesetzte organische Polymer, 10 bis 70 Gew.-% einpolymerisierte Einheiten vinylaromatischer Monomere und 30 bis 90 Gew.-% einpolymerisierte Einheiten von Dien-Monomeren aufweist und 0,5 bis 5 % der aromatischen Einheiten sulfoniert sind.

11. Verfahren nach Anspruch 10, **dadurch gekennzeichnet, dass** das für die Umsetzung eingesetzte organische Polymer, jeweils bezogen auf das für die Umsetzung eingesetzte organische Polymer, 20 bis 60 Gew.-% einpolymerisierte Einheiten vinylaromatischer Monomere und 40 bis 80 Gew.-% einpolymerisierte Einheiten von Dien-Monomeren aufweist und 1 bis 4 % der aromatischen Einheiten sulfoniert sind.

12. Verfahren nach einem der Ansprüche 1 bis 11, **dadurch gekennzeichnet, dass** das phosphorhaltige organische Polymer zur Bildung von Phosphonsäure-Gruppen hydrolisiert wird.

13. Phosphorhaltiges organisches Polymer, erhältlich nach dem Verfahren gemäß einem der Ansprüche 1 bis 12.

14. Verwendung von phosphorhaltigen organischen Polymeren nach Anspruch 13 zur flammhemmenden Ausrüstung brennbarer Feststoffe, vorzugsweise von Kunststoffen, Holz oder natürlichen Fasern, oder zur Ausrüstung anorganischer oxidischer Feststoffe.

15. Verwendung nach Anspruch 14, **dadurch gekennzeichnet, dass** zur flammhemmenden Ausrüstung phosphorhaltige organische Polymere eingesetzt werden, die nicht zur Bildung von Phosphonsäure-Gruppen hydrolisiert wurden, und zur Ausrüstung anorganischer oxidischer Feststoffe phosphorhaltige organische Polymere eingesetzt werden, die zur Bildung von Phosphonsäure-Gruppen hydrolisiert wurden.

16. Thermoplastische Formmasse, enthaltend
a) 30 bis 95 Gew.-% mindestens eines thermoplastischen Polymers, das keinen Phosphor enthält, als Komponente A,
b) 1 bis 30 Gew.-% mindestens eines phosphorhaltigen organischen Polymers gemäß Anspruch 13 als Komponente B,
c) 0 bis 15 Gew.-% weitere flammhemmende Hilfsstoffe als Komponente C,
d) 0 bis 20 Gew.-% mindestens eines schlagzäh-modifizierenden Polymers als Komponente D,
e) 0 bis 50 Gew.-% Glasfasern als Komponente E,
f) 0 bis 30 Gew.-% weitere Zusatzstoffe als Komponente F,
wobei die Gesamtmenge der Komponenten A bis F 100 Gew.-% ergibt.
